Europäisches Patentamt

European Patent Office

Office européen des brevets

(11) Publication number: **0 422 898 B1**

## EUROPEAN PATENT SPECIFICATION

(45) Date of publication of patent specification: **21.09.94**  (51) Int. Cl.⁵: **B65D 81/34**

(21) Application number: **90311054.2**

(22) Date of filing: **09.10.90**

(54) Infusion coffee filter pack.

(30) Priority: **11.10.89 US 419995**
　　　　**11.10.89 US 419861**

(43) Date of publication of application:
**17.04.91 Bulletin 91/16**

(45) Publication of the grant of the patent:
**21.09.94 Bulletin 94/38**

(84) Designated Contracting States:
**AT BE CH DE DK ES FR GB GR IT LI LU NL SE**

(56) References cited:
**BE-A- 646 015**　　**CH-A- 527 592**
**DE-A- 3 504 441**　　**FR-A- 1 169 093**
**GB-A- 231 684**　　**GB-A- 971 332**
**GB-A- 1 189 011**　　**US-A- 4 372 098**

(73) Proprietor: **KRAFT GENERAL FOODS, INC.**
**250 North Street**
**White Plains New York 10625 (US)**

(72) Inventor: **Rehman, Warren C.**
**P.O. Box 392**
**Three Bridges, New Jersey 08887 (US)**
Inventor: **McFieggan, Pamela Jane Summers**
**136 Midvale Avenue**
**New Jersey 07946 (US)**
Inventor: **Delonis, Michael E.**
**80 Nordica Drive**
**Croton-on-Hudson, New York 10520 (US)**

(74) Representative: **Eyles, Christopher Thomas et al**
**W.P. THOMPSON & CO.**
**Celcon House**
**289-293 High Holborn**
**London WC1V 7HU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

BACKGROUND OF THE INVENTION

1. Field of the invention

The present invention relates generally to an improved infusion coffee filter pack designed to fit and provide for the consistent brewing of quality coffee in a variety of American style and European style coffee brewing appliances.

The present invention relates more specifically to a universal infusion coffee filter pack designed to be utilized in a variety of different coffee maker appliances, such as American style appliances utilizing a filter similar to a cupcake wrapper as produced by Mr. Coffee and Norelco, and European style appliances utilizing a conical type of filter as produced by Braun and Krups. A universal coffee filter pack as described herein should be designed to be commercially produced at a relatively high manufacturing production rate, and should be capable of universally fitting and providing quality coffee brewing in a variety of typical prior art coffee makers.

2. Discussion of the Prior Art

Infusion coffee and tea filter packs are generally known in the prior art in a variety of forms and types. However, the prior art has not generally attempted an indepth and detailed study to optimize the design of a universal coffee infusion pack of the type disclosed herein, wherein the factors affecting the performance of an infusion coffee filter pack in a variety of typical prior art brewing appliances having been studied and evaluated to optimize the design and performance of a universal coffee filter pack.

DE-A-3504441 discloses a compact coffee filter consisting of a filter insert which fits in a receptacle therefor. The filter insert is formed from two pieces of filter paper of unequal size, the upper piece being substantially flat and having an opening sealed by a gummed label and the lower piece being larger and formed with appropriate near vertical pleats to form a rounded pocket to receive a quantity of ground coffee.

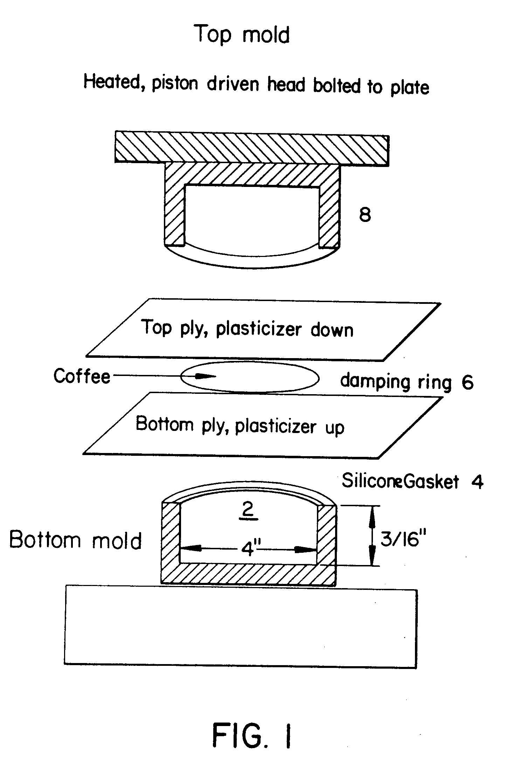

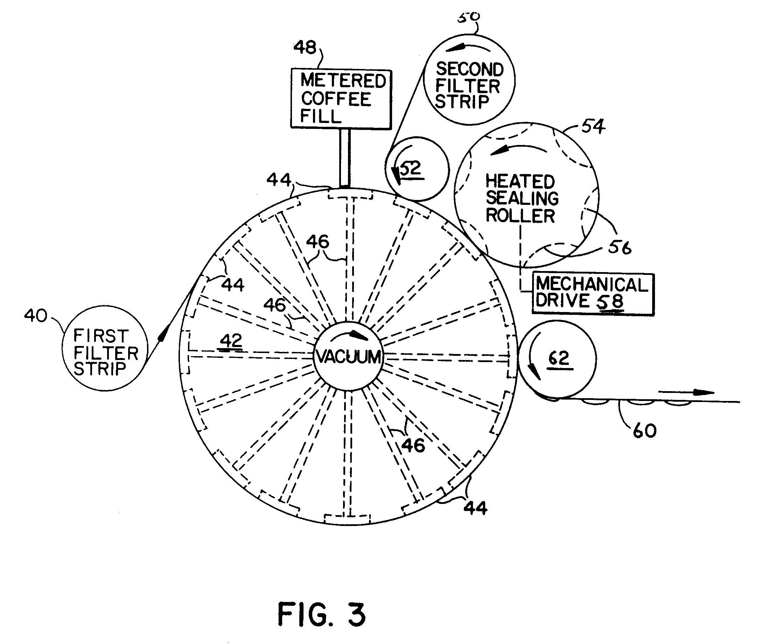

GB-A-971332 describes a synthetic food packet, for example a sealed porous flexible sack containing ground coffee, made from a synthetic non-woven paper consisting of synthetic polymeric single filament fibres of a specified range of thickness and having a melting point in the order of at least $400°F$ ($204.4°C$) heterogeneously arranged and fused together. Figures 1 and 3 show how the resulting sack is sealed along 3 sides thereof. It is recommended to include in the bag packet a volume of drip grind coffee of from 40% to 60% of the full volumetric capacity of the bag packet.

GB-A-1189011 discloses formation of a beverage tape formed of water permeable material and having a plurality of pods of beverage material formed therein. Most or all of the thickness of each pod, which is of elongate shape, projects from one face of the tape. It is also taught how to form such a tape by forming dimples in one layer of tape, which stretches during such dimpling, followed by filling the resulting dimples with powdered beverage, briquetting the charges of powdered beverage in the dimples, and then heat sealing a second layer of tape to the first layer of tape to encapsulate the pods of beverage.

SUMMARY OF THE INVENTION

The universal coffee filter pack described herein is designed to be produced at a relatively high manufacturing production rate, while being designed to fit a large variety of coffee makers to be brewed with five cups of water per filter pack, designed to be a half of a pot for common ten cup coffee brewing machines, or to provide for brewing ten cups of coffee by utilizing two superimposed coffee filter packs.

According to the present invention, there is provided a drip coffee pack having loose coffee therein comprising a first circular piece of filter paper, a second circular piece of filter paper, the first circular piece of filter paper having a greater surface area than the second circular piece of filter paper and peripherally sealed thereto to form a central rounded pocket surrounded by a sealed flange, and a metered quantity of loose ground coffee within the rounded pocket, the rounded product having a head space within the rounded pocket, characterized in that the second circular piece of filter paper has a diameter of approximately five inches (12.70 cm), that the first circular piece of filter paper is formed from stretch filter paper and has had its surface area increased by at least 3% relative to the second circular piece of filter paper, that the rounded pocket has a diameter of approximately four inches (10.16 cm), that the flange is substantially an half inch (1.27 cm) in width, and that the head space within the rounded pocket constitutes substantially 50 percent or greater of the volume of the rounded pocket.

2

The universal coffee filter pack is designed to fit many different drip and percolator coffee makers, as well as coffee makers with spray nozzles therein. A universal design is disclosed having a total diameter of approximately five inches (12.7 cm), which includes a sealed border or flange of one half inch (1.27 cm) extending around the circumference of the coffee filter pack. Moreover, the coffee in the filter pack is provided with a sufficient head space, generally 50% or greater, to allow for expansion of the coffee grounds during brewing to provide proper brewing conditions.

The universal infusion coffee filter pack is produced by placing a first strip of stretch filter paper adjacent to a mold having a cylindrical mold pocket therein. The strip of filter paper is then caused to conform to the cylindrical mold pocket, as by mechanical or vacuum means. This operation causes the filter paper to stretch to conform to the cylindrical mold, causing an increasing in the surface area of the filter paper by at least 3% to accommodate the side wall of the cylindrical mold. A measured quantity of ground coffee is then deposited into the mold pocket over the conformed filter paper. A second substantially flat strip of filter paper is then placed over the first strip of filter paper and the ground coffee in the mold pocket. The first and second strips of filter paper are then sealed together around the coffee filled mold pocket, as by heat sealing, to form the one half inch (1.27 cm) flange area. The presence of the one half inch (1.27 cm) flange in combination with the increased surface area caused by stretching results in an increase in the soluble solids extraction and a decrease in the standard deviation of the soluble solids extraction, as shown by the tests described hereinbelow.

The first strip of filter paper comprises a stretch filter paper or a creped stretch filter paper to enable it to conform to the cylindrical mold without tearing. The second strip of filter paper need not stretch like the first, but could also be stretch filter paper or creped stretch filter paper to simplify supplies of paper. The first and second strips of filter paper preferably comprise a polypropylene or polyethylene plasticizer impregnated base paper to enable the first and second strips of filter paper to be heat sealed together. This is preferably accomplished by utilizing a heated press around the cylindrical mold pocket to press and heat seal the first and second strips of filter paper together in the half inch (1.27 cm) flange area around the circular mold pocket.

An important feature of the cylindrical mold pocket is that it have a substantially square shoulder around the top edge of the mold to force a sufficient stretching of the first strip of filter paper to provide a sufficiently large and deep mold pocket to provide for a sufficient volume of ground coffee and also for its swelling and enlargement during the brewing process.

Preferably the metered amount of coffee grounds suffices to brew five cups of water to form a universal infusion coffee pack. Moreover, the filter paper preferably is a stretch filter paper having an elongation factor without tearing capacity in excess of substantially 7%.

BRIEF DESCRIPTION OF THE DRAWINGS

The foregoing objects and advantages of the present invention for an improved infusion coffee filter pack may be more readily understood by one skilled in the art with reference being had to the following detailed description of a preferred embodiment thereof, taken in conjunction with the accompanying drawings wherein like elements are designated by identical reference numerals throughout the several views, and in which:

Figure 1 is a schematic view of an embodiment of a mold which was used to produce improved infusion coffee filter packs as described and tested herein;

Figure 2 is a schematic view of a second exemplary embodiment of a mold which can be utilized to produce infusion coffee filter packs pursuant to the present invention;

Figure 3 is a schematic view of an exemplary embodiment of a rotary mold and packaging machine which can be utilized to produce infusion coffee filter packs pursuant to the present invention.

Figure 4 is a front perspective view of a full size embodiment of a coffee infusion pack pursuant to the present invention.

Figure 5 is a top plan view of the infusion coffee filter pack of Figure 4;

Figure 6 is a side elevational view of the infusion coffee filter pack of Figures 4 and 5;

Figure 7 illustrates four plots of data on coffee soluble solids extractions, on the performance of American style appliances with both stretch and nonstretch filter paper infusion coffee packs, and on the performance of European style appliances with both stretch and nonstretch filter paper infusion coffee packs;

Figure 8 illustrates two plots of data on percent soluble solids extraction, on the performance of American style appliances with coffee infusion packs with flanges and formed of both stretch and nonstretch filter paper coffee, and with no flange and formed of stretch filter paper, and on the performance of European style appliances with coffee infusion packs with flanges and formed of both stretch and nonstretch filter, and with no flange and formed of stretch filter paper;

Figure 9 illustrates eight plots of data on the percent extraction yield as a function of both high headspace and low space, classified as to the performance of American style appliances with coffee infusion packs of both stretch and nonstretch filter paper, and also on the performance of European style appliances with coffee infusion packs of both stretch and nonstretch filter paper;

Figure 10 illustrates four plots of data on the standard deviation of percent extraction, classified as to the performance of stretch filter paper coffee packs with and without a flange, and of nonstretch filter paper coffee packs with and without a flange; and

Figure 11 illustrates eight plots of data on the standard deviation of percent extraction, classified as to the performance of American style appliances with coffee infusion packs with and without a flange, formed of both stretch filter paper and nonstretch filter paper, and on the performance of European style appliances with coffee infusion packs with and without a flange, formed of both stretch filter paper and nonstretch filter paper.

## DETAILED DESCRIPTION OF THE DRAWINGS

There are a number of factors affecting the performance of coffee filter pouches as measured by soluble solids extraction, brew consistency, brew volume, brew time, and physical behavior. Variables evaluated in the development of the present invention include grind, paper type, paper stretch, the presence of a flange, headspace, and the type of brewing appliance or pot.

Two very important measures of performance are soluble solids extraction and extraction consistency. The type of brewing appliance was found to be a major factor both alone and in interaction with other variables. The results indicate that paper, grind, and flange had the greatest impact on soluble solids extraction. Brew consistency was most affected by flange and paper. By optimizing these factors, an optimum design and configuration for coffee filter pouches has been developed.

The following Table of Contents lists the divisions and subdivisions of technical areas and discussions herein.

Results and Discussion

A. Independent Variables

    1. Pot Performance
    2. Pouched Coffee vs Loose Coffee
    3. Polyethylene vs Polypropylene Paper
    4. Preparation level 5 and 10 cup

B. Dependent Variables

    1. Soluble Solids Extraction
        a. Stretch of Paper and Interactions
        b. Grind and Interactions
        c. Flange Interactions
        d. Headspace
    2. Brew Consistency
        a. Flange and Interactions
        b. Stretch of Paper Interactions
        c. Flange and Stretch Interactions
    3. Brew Time

Conclusions

Technical

A. Variables
    1. Coffee
    2. Grind

4

3. Filter Papers
4. Flange
5. Headspace
B. Pouch manufacture
C. Coffee Brewers, Brew technique, and Analysis

The development of the present invention resulted from the definition of the key parameters, relationships, and interactions affecting the performance of coffee filter pouches, to optimize their design. In an effort to utilize objective measures of performance, the development concentrated on extracted soluble solids, brew consistency, brew volume, and brew time as points of comparison. Flavor was monitored to identify abnormal brews.

RESULTS AND DISCUSSION

A. Independent Variables

1. Appliance or Pot Performance

The following discussion is based on experiments one to six described in detail hereinbelow.

The amount of extracted soluble solids did not vary significantly (95% statistical confidence level) from pot to pot for any variant in experiment #2 over 144 observations. In other experiments, where there were variations, they were below the taste threshold as confirmed by a sensory panel. To simulate consumer behavior, brews were prepared according to recipes specific to each pot type and based on the pot line.

The appliance type also affected brew volume. From 87 to 89% of the water added to the Mr. Coffee pot was returned as brew. All other pots tested returned 90-94% of the added water. The water that was lost was absorbed into the coffee bed or filter paper.

2. Pouched Coffee vs Loose Coffee

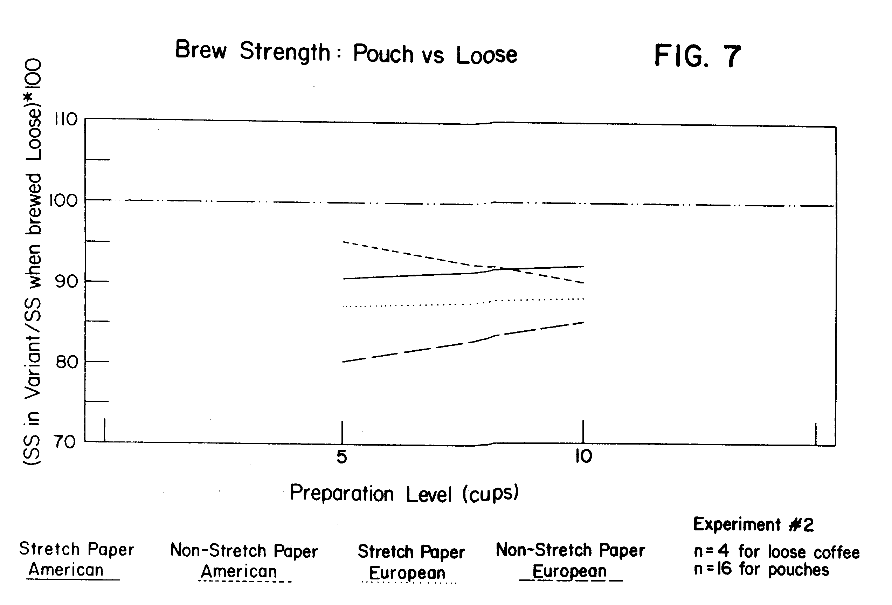

Coffee brewed in stretch coffee filter packs in either style of pot or recipe level performed similarly, producing approximately 10% less solids than coffee brewed loose (Figure 7). When coffee was brewed in European style pots, the stretch paper yielded 19% more solids than did the nonstretch paper. This was especially true at the 5 cup recipe where there was a 22% increase in extraction with the stretch paper. This difference may be attributed to the fact that the filters provided with the European brewers were cone shaped and so completely filled the brew basket.

The nonstretch pouches could not physically accomplish this and so caused a reduction in the amount of solids extracted. In the European pots, the stretch pouches performed much better than the nonstretch pouches, because the stretch feature allowed the bottom of the pouch to partially conform to the cone shape and roughly approximate the filters supplied with the brewer. The stretch of the paper was not a significant factor in the American style pots.

3. Polyethylene vs Polypropylene Paper

The majority of the experiments were performed with paper containing a polyethylene sealing agent, but experimental data showed that the filter papers with polyethylene and polypropylene sealing agents behaved equivalently by all measures as shown in Table 1. Subsequently, the polypropylene paper was used to manufacture filter packs because of a reduction in tearing with polypropylene paper.

4. Preparation Level: 5 and 10 cup

Pots brewed at the two recipe levels performed similarly both in terms of brew volume and soluble solids. The five cup preparation yielded a brew with 0.87% solids (n = 186, wherein n is the number of data samples) and ten cup brews yielded 0.85% solids (n = 195). All recipe levels are merged to best cover the range of consumer behavior unless noted otherwise herein.

B. Dependent Variables

1. Soluble Solids Extraction

There were three major variables affecting the amount of soluble solids extracted from a filter pouch. In order of importance they were paper, grind, and flange. Headspace was also a significant factor, as was the type of brewing appliance, which when combined with these four variables formed significant interactions.

Each of these variables and their effect on solids extraction are discussed in the following section.

a. Stretch of Paper and Interactions

Stretch paper improved the extraction of soluble solids in all experiments. The interaction between appliance type and paper was an even stronger factor.

In Experiment 5, the paper effect was significant at a statistical confidence level of 95%, and the paper and appliance type relationship was significant at a confidence level of 98%.

|  | % Soluble Solids Extracted | | |
|---|---|---|---|
|  | All Appliances | American style | European style |
| Stretch | 0.90 | 0.88 | 0.92 |
| Nonstretch | 0.80 | 0.84 | 0.76 |
| # of Observations | 12 | 6 | 6 |
| % Improvement | 13 | 5 | 21 |

This improvement in extraction may be attributed to the extensibility and possibly even the "softness" of the stretch paper i.e., the stretch paper allows the coffee to expand and conform to the conical shape of the European pots and so works optimally with that design as compared with nonstretch paper.

A second possible hypothesis for the improvement in solids extraction with stretch paper is that the stretch polyethylene paper wetted much faster (3.4 second) than did the nonstretch polyethylene paper which required 15.5 seconds. This is likely due to the higher surface area of the creped stretch paper, which might cause a wicking action quickly bringing hot water in contact with the coffee bed and so improving extraction.

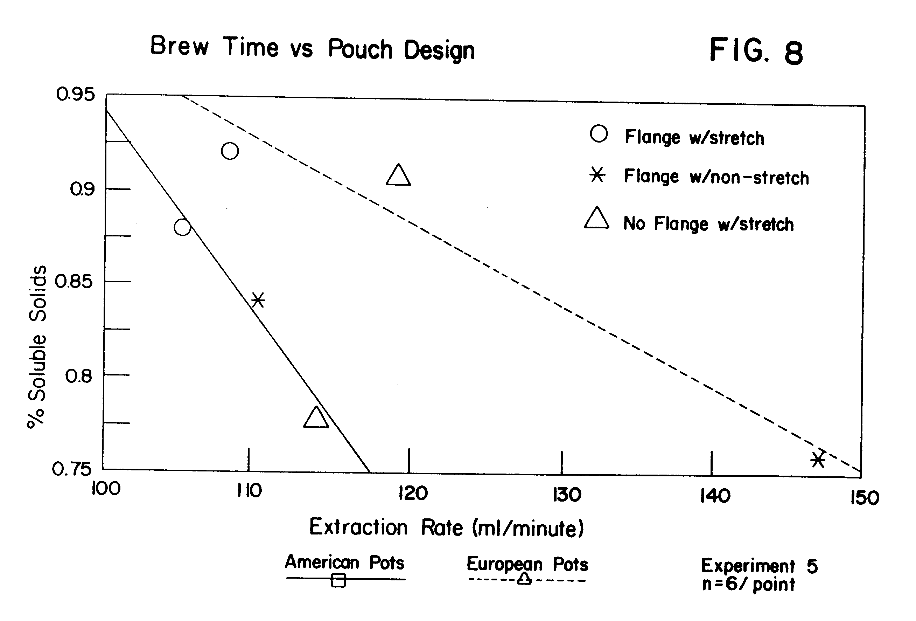

The final hypothesis involves brew time which was longer for stretch paper than for nonstretch paper in experiment 5 (Figure 8). This slowing of the brewing process would increase the water and coffee contact resulting in improved extraction.

b. Grind and Interactions

It was no surprise that the fine grind (583 xbar-average coffee ground size in microns) yielded 5% more extracted solids than did the coarser grind (704 xbar). The data was interesting on the relationship between pot type, paper, and grind, which in experiment #2 was significant at a 94% statistical confidence level. When comparing the fine and coarse grinds, pouches made of stretch paper and brewed in European type pots showed the largest improvement in solids extraction. Due to the extensibility of the paper, the pouch is better able to mechanically conform to the conically shaped basket and so takes advantage of the yield increase possible with the finer grind and European pot design. It is noted that there is a balance between the size of the grounds and the porosity of the filter paper, which should not become plugged with the selected size grounds. Generally, a coffee grind range of between 300 and 750 xbar is preferred.

| Most Improvement with change from Coarse to Fine Least | 13% European pot with stretch paper |
|---|---|
|  | 9% European pot with Nonstretch paper |
|  | 4%* American pot with stretch paper |
|  | -4%* American pot with Nonstretch paper |

note:
* = statistically significant

### c. Flange Interactions

The flange is a lip that extends from the edge of the pouch beginning where the two plys of paper are sealed. The normal flange was 1/2 inch (1.27 cm). Flangeless pouches had a maximum of 1/8 inch (0.32 cm) overhang.

When the data from Experiment #5 was analyzed by appliance or pot type, a correlation significant at a 95% statistical confidence level was found between flange, appliance type, and soluble solids extracted. The flanged pouches brewed in American style pots had 13% more solids extracted from their contents than did the non flanged pouches.

|  | % Soluble Solids Extracted | |
|---|---|---|
|  | American style Mean | European style Mean |
| Flange | 0.88 | 0.92 |
| No Flange | 0.78 | 0.91 |
| # of Observations | 6 | 6 |
| % Improvement | 13 | None |

No correlation was observed between the flanged design and soluble solids extraction in Experiment 2.

### d. Headspace

Headspace is the amount of void volume inside a filter pouch. Different headspaces were achieved by varying the amount of coffee added to a fixed pouch size. The high headspace (50%) pouches contained 23.5 grams of coffee. The low headspace (25%) pouches contained 35 grams.

Two experiments were performed to examine the effect of headspace on pouch performance. The first held the water constant and varied the headspace to two levels, 25% and 50%. The second experiment varied both the water and the headspace proportionally.

In the first study, proportionally more solids were extracted from the high headspace pouches than the low headspace ones. This was probably due to the high water to coffee ratio which resulted in increased washing of the coffee bed and so increased extraction.

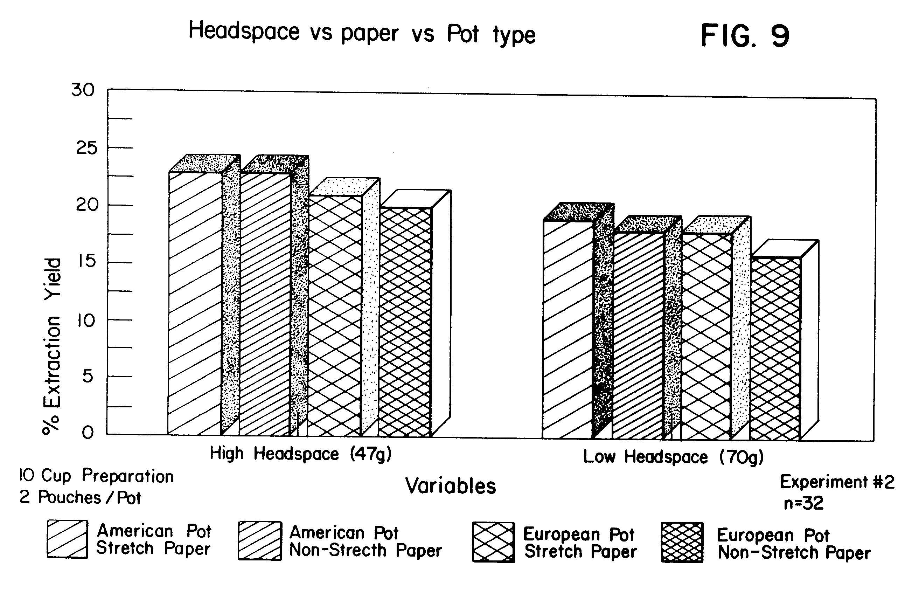

Low headspace pouches brewed in European type pots produced proportionally less soluble solids than any other combination of pouch and pot. A synergy was also demonstrated between pot, paper, and headspace. For example, a comparison of pouches brewed in European style pots and made of nonstretch vs stretch paper showed a 7% drop in extracted solids at the high headspace and 13% at the low (Figure 9). The reduction in solids extraction is probably because the nonstretch low headspace pouch was unable to expand to accommodate the water swelled coffee e.g., containment of the wet swollen coffee bed during extraction reduced the solids extraction.

The low headspace nonstretch paper produced a lower solids level in all pots than the stretch paper. With the high headspace, only nonstretch pouches brewed in European pots showed a decline in extraction. This indicates the importance of the stretch paper in achieving an acceptable product while providing processing flexibility.

Experiment #4 removed the effect of increased washing by maintaining the water to coffee ratio. Pouches made of nonstretch paper with low headspace produced less solids than did pouches made of any other combination of headspace and paper.

|  | % Soluble Solids Extracted | |
|---|---|---|
|  | High Headspace (50%) | Low Headspace (25%) |
| Stretch | 0.77 | 0.77 |
| Nonstretch | 0.78 | 0.72 |
| # of Observations | 3 | 3 |
| % Difference | none | 6% |
| (Norelco type appliance only) | | |

The low headspace pouches (25%) packed in nonstretch paper actually burst during brewing approximately 5% of the time, producing an unacceptable product and allowing grounds into the brew.

Generally, a head space between 25 and 75% is desirable, and a headspace between 25 and 60% is most preferred.

## 2. Brew Consistency

There were two controllable variables affecting brew consistency. The effects of both variables were strongly affected by pot type. The presence of a flange was found to improve brew consistency in both types of appliances, while increasing the extensibility of the paper yielded a reduction in brew variability in European style pots.

These two variables are discussed in more detail in the following section. This section will concentrate on analysis of data from Experiment #2 because of the large sample size.

### a. Flange

There was a statistically significant improvement (99% statistical confidence level) in brew consistency when pouches were manufactured with a flange. The largest impact was on the American Norelco cupcake style brewers, where standard deviations and so brew variability were reduced by as much as 50%.

| Variability of Soluble Solids Extraction | | | | |
|---|---|---|---|---|
| Pouch Design | American style Pot | | European style Pot | |
| | Mean | Std. Dev. | Mean | Std. Dev. |
| Flanged Design | 0.78 | 0.073 | 0.76 | 0.097 |
| No Flange | 0.77 | 0.111 | 0.76 | 0.140 |
| # of Observations | 32 | | 32 | |

Note the much larger deviations with the tests with no flange. One explanation for the improvement in brew consistency with a flange is that the flange directs the water droplets into the pouch. Without the flange, water can run down the sides of the brew basket with resultant minimal and/or variable contact with the coffee bed.

### b. Paper

Pouches made of stretch paper and brewed in European style pots had less variation (90% statistical confidence level) in brew solids than did pouches made of nonstretch paper of the same design and contents. Paper extensibility had no substantial effect on brew variability in American style pots.

| Variability of Soluble Solids Extraction Standard Deviation | | | |
|---|---|---|---|
| Paper | All Appliances Std. Dev. | American style Std. Dev. | European style Std. Dev. |
| Stretch | 0.097 | 0.094 | 0.101 |
| Nonstretch | 0.115 | 0.094 | 0.131 |
| # of Observations | 64 | 32 | 32 |

Paper extensibility was a less important factor in minimizing brew variability than the flange.

### c. Flange and Stretch Interactions

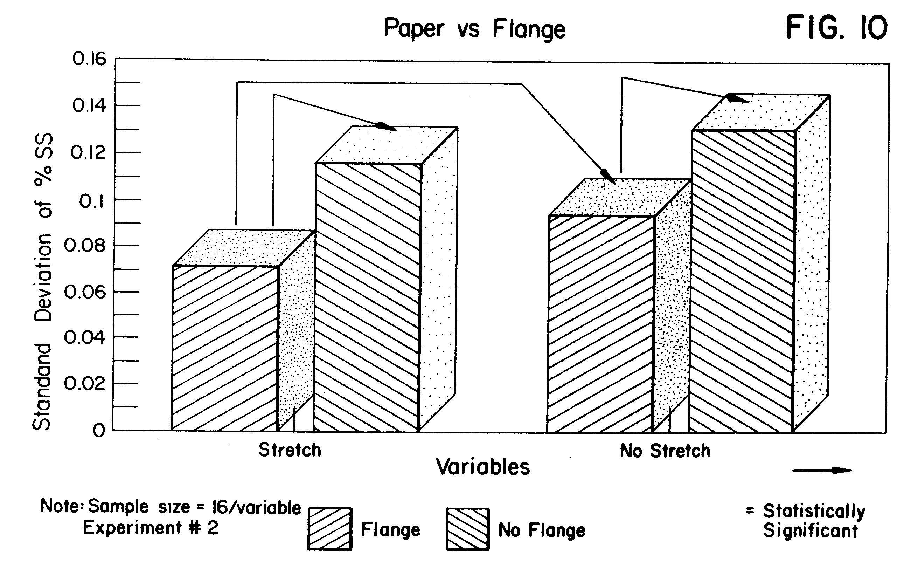

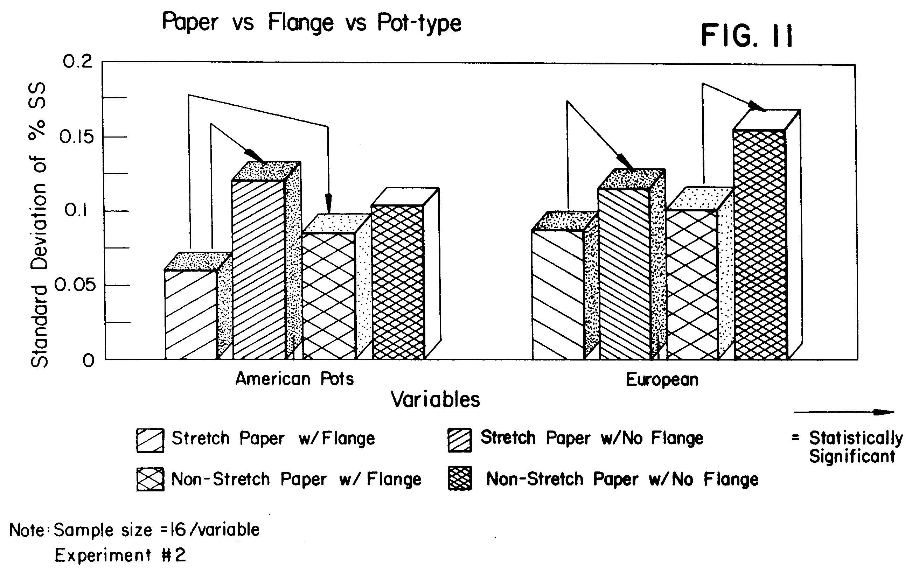

An interaction between flange and paper was observed (Figures 10 and 11). The flange caused the largest reduction in brew variability when pouches were made of stretch paper and brewed in an American style pot. In terms of filter packs, this points up the essential nature of the flange to achieve brew consistency since the stretch paper allows formation of the pouches without tearing.

| Variability of Soluble Solids Extraction Standard Deivation | | | | |
|---|---|---|---|---|
| Pouch Configuration | American style Appliance | | European style Appliance | |
| | Stretch Std. Dev. | Nonstretch Std. Dev. | Stretch Std. Dev. | Nonstretch Std. Dev. |
| Flanged design | 0.060 | 0.085 | 0.087 | 0.102 |
| No Flange | 0.121 | 0.104 | 0.116 | 0.158 |
| # of Observations | 16 | 16 | 16 | 16 |

## 3. Brew Time

Brew time was largely a function of the appliance type (99% statistical confidence level), with the European pots brewing their 10 cups up to 20% faster than the American pots. The Krups pots brewed the fastest of the four types, requiring under 10 minutes to brew 10 cups. the Norelco pots required 12 minutes for the same 10 cups, but they also used 18% more water. The Mr. Coffee pots had the largest variation in brew time.

| Brew time vs Pot (ml/minute) | | | | |
|---|---|---|---|---|
| | Braun | Krups | Mr. Coffee | Norelco |
| Extraction rate (ml/min) | 127 | 136 | 119 | 127 |
| Standard Deviation | 6.16 | 9.41 | 28.55 | 12.64 |
| Total Time (minutes) | 9.76 | 9.69 | 11.36 | 12.21 |
| # of Observations | 22 | 24 | 22 | 23 |

Paper had a measurable effect on brew time. Pouches made of nonstretch paper and prepared in European style pots brewed the fastest and had lower soluble solids than did any other combination of pot and paper.

In Experiment #5, the flanged pouches required 9% more time to brew an equivalent amount of coffee than did the nonflanged pouches (Figure 8). The observed slowing of the brewing process provides additional support for the concept that the flange diverts the water into the pouch and off the sides of the brew basket. This is responsible for the up to 13% increase in soluble solids extracted from the flanged pouches.

| Extraction, Brew Time, Flange, and Paper (n = 6) | | | | |
|---|---|---|---|---|
| Pouch Configuration | American style Pot | | European style Pot | |
| | Stretch | Nonstretch | Stretch | Nonstretch |
| Flanged design | | | | |
| Soluble Solids (%) | 0.88 | 0.84 | 0.92 | 0.76 |
| Time (minutes) | 13.31 | 12.74 | 11.73 | 8.58 |
| No Flange | | | | |
| Soluble Solids (%) | 0.78 | | 0.91 | |
| Time (minutes | 12.3 | | 10.6 | |

## CONCLUSIONS

In conclusion, the amount of soluble solids extracted from a filter pouch was linked to four factors, paper, grind, headspace, and flange. The extensibility of the paper appeared to be key in the ability of the pouches to perform successfully in conical (European) pots, probably because it allowed them to better conform to the shape of the brew basket.

Brew consistency was largely a function of two variables, flange and paper. The flange contributed the most to brew consistency. Stretch paper was also a factor in European type appliances to a lesser degree. There was a synergy between flange and paper which contributed to brew consistency, with stretch paper and a flange yielding the most consistent brew.

In addition to the contribution of the flange to brew consistency, there was also an improvement in the mechanical performance of flanged pouches. Flangeless pouches brewed in European style pots frequently slid onto their side into the coffee baskets forming an irregular/nonreproducible coffee bed. Flanged pouches in American type pots appeared to direct water into the coffee bed and so increase extraction.

Technical Section

A. Variables

1. Coffee

The decaffeinated coffee used in this study was decaffeinated and roasted. A 40 pound (18.14 kg) charge of high Arabica blend was roasted to a 45 +/- 2 roast color in a 40 pound (18.14 kg) Probat roaster for just under 11 minutes. The temperature profile was 350/330°F (176.7/165.6°C) with a charge temperature of 400°F (204.4°C) and a final temperature of 360°F (182.2°C). The coffee was held for 30 minutes prior to grinding. The density of the roasted whole bean was 0.319 grams/cc. The moisture target was 5.2%.

The caffeinated coffee was roasted under conditions similar to those used for the decaffeinated coffee. The caffeinated coffee was roasted to a 60 +/- 2 roast color and moisture of 5.2%. The roasted whole bean had a density of 0.359 grams/cc.

2. Grind

All coffee was ground, within 24 hours of roasting, on a Gump grinder with normalizer. The roast and ground coffee was packed in one pound (0.45 kg) cans under 29″ (72 millibar) vacuum for later pouching.

The decaffeinated coffee was ground to a target of 600xbar (618 actual) and had a density of 0.340 grams/cc.

The caffeinated beans were ground to two large targets: fine (583 xbar actual) and coarse (704 xbar actual). Both grinds had a density of 0.342 grams/cc.

3. Filter Papers

The filter papers 1, 2, and 3 were manufactured by Dexter Paper Company, Windsor Locks, Ct. These papers varied both in their plasticizer/sealing agents and in the amount of stretch that had been introduced into them by creping. Creping or microcreping is a process whereby dry paper is squeezed up against a doctor blade forming small folds parallel to the blade. When the force against the blade is removed, some of the folds remain providing some degree of extensibility or stretch. Our target was 8-12% stretch in the machine direction. The fourth filter paper type used in these experiments was provided by the manufacturer of the individual appliance at the point of sale.

1.) Nonstretch paper: Dexter 9355 paper "NS" polyethylene pulp rayon plasticizer and cellulosic fibers (23:77)
Basis weight: 14.0 lb./2880 ft$^2$ (6.35 kg/267.56 m$^2$)
Air permeability: 975 liters/minute/100 cm$^2$ 3M treatment (lipophobic stain resistance): 0.75% by weight
Porosity: 1000 liter/minute
Formation: 85.0%
Brightness: 70.0%
pH: 6.8
Strength: Cross direction: dry = 1.34 lb./inch (234.7 Newtons/metre)
Machine direction: dry = 0.67 lb./inch (117.3 Newtons/metre), wet = 0.50 lb.inch (87.6 Newtons/metre).
Elongation: Cross direction: 4.8%, Machine direction: 4.2%
Paper moisture: 4-6.5%
2.) Stretch paper: Dexter 9503 paper ("PES" of "S") polyethylene pulp rayon plasticizer and cellulosic fibers.
Basis weight: 17.15 lb./3000 ft$^2$ (7.78 kg/278.71 m$^2$)

Air permeability: 975 liters/minute/100 cm$^2$

Strength: Cross direction: dry = 0.24 lb./inch (42.0 Newtons/metre), wet = 0.08 lb./inch (14.0 Newtons/metre)

Machine direction: dry = 0.32 lb./inch (56.0 Newtons/metre), wet = 0.17 lb./inch (29.8 Newtons/metre).

Elongation: Cross direction: 9.6%, Machine direction: 8.3%

Paper moisture: 4-6.5%

Seal profile: the strength of a seal (delamination) in lbs/inch (Newtons/metre).

Seal Temperature in °F (°C) vs lbs/inch (Newtons/metre) needed to delaminate.

| Degrees F (C) | 275(135.0) | 300(148.9) | 325(162.8) | 350(176.7) | 375(190.6) |
|---|---|---|---|---|---|
| lbs./inch (Newtons/metre) | 0.23(40.3) | 0.25(43.8) | 0.28(49.0) | 0.38(66.5) | 0.47(82.3) |

3.) Stretch paper (polypropylene): Dexter 9926 paper "PPS" polypropylene plasticizer and cellulosic fibers.

Basis weight: 15.35 lb./3000 ft$^2$ (6.96 kg/278.71 m$^2$)

Air permeability: 370 liters/minute/100 cm$^2$

Strength: Cross direction: dry = 0.24 lb./inch (42.0 Newtons/metre), wet = 0.08 lb./inch (14.0 Newtons/metre)

Machine Direction: dry = 0.32 lb./inch (56.0 Newtons/metre), wet = 0.17 lb./inch (29.8 Newtons/metre)

Ratio of machine to cross directional (dry): 51.6

Elongation:

Cross direction: 12.4%, Machine direction 7.3%

Paper moisture: 4-6.5%

Seal profile: the strength of a seal (delamination) in lbs/inch (Newtons/metre).

Seal Temperature in °F (°C) vs lbs/inch (Newtons/metre) needed to delaminate.

| Degrees F (C) | 275(135.0) | 300(148.9) | 325(162.8) | 350(176.7) | 375(190.6) |
|---|---|---|---|---|---|
| lbs./inch (Newtons/metre) | 0.0(0.0) | 0.41(71.8) | 1.08(189.1) | 1.20(210.2) | 0.75(131.3) |

4.) Commercially available filter paper supplied with brewers, either conical filters or cupcake-style filters.

Generally, a stretch paper having an elongation factor of at least 6%, and preferably at least 8%, is preferred.

4. Flange

The flange is the area extending from the edge of the pouch where the two plys of paper meet and are sealed. Pouches were manufactured in two ways, with a 1/2 inch (1.27 cm) flange, and flangeless (with a maximum of 1/8 inch [0.32 cm]).

5. Headspace

The coffee filter packs or pouches were manufactured with low (25%) and high (50%) headspaces. Headspace was controlled by keeping everything constant but the grams of coffee inside the pouch. The low headspace pouches contained 35 grams of coffee, the high headspace held 23.5 grams.

B. Pouch Manufacture

The pouches were made with hand-cut Dexter paper. The pouches were hand filled with the specified amount of coffee and sealed between a piston driven head (top) and a mold having a cylindrical mold cavity, similar to that illustrated in Figure 1 and explained in detail hereinbelow. The cylindrical mold cavity had a 4" (10.2 cm) inner diameter, and a depth of 3/16" (0.48 cm) for the standard 23.5 gram pouches and 5/16" (0.79 cm) for the 35 gram pouches. The electrically heated head was maintained at 375°F (190.6°C) for the polyethylene paper and 450°F (232.2°C) for the polypropylene. A force of 20-25 psig (1.42-1.76 kg/cm$^2$ gauge) was exerted onto the flange sealing area for 10.5 seconds. A rate of production of 600-650 pouches/day was achieved under these operating conditions. Once completed, ten pouches were packed in a Mylar Special Delivery bag which was gas flushed ($CO_2$), sealed with a Koch sealer, and kept frozen until the pouches were brewed.

C. Coffee Brewers, Brew technique, and Analysis

Two main types of electric drip coffee appliances or pots were used for these experiments. The American style flat bottomed cupcake-style filter and pot was represented by the Mr. Coffee (CM10 and 1DS-10) and the Norelco (C284e). The European style conical filter and basket brewer was represented by the Krups (164-70-51) and the Braun (KF80 and M4063).

Coffee was brewed at both a 5 and 10 cup recipe level using one or two filter pouches accordingly. The amount of water put into the pots was based on the pot line according to the manufacturer's specifications. Once the pot line was measured, that amount of water was measured in a graduate and used for all subsequent brews on that pot type.

The specific pot used and the order of brew were randomized. Tests were replicated a minimum of twice with much of the brewing done in triplicate. The final brew temperature was monitored to assure that the pots were performing normally and not operating at an unusually low or high temperature invalidating the brew data. Flavor was also monitored looking for brew abnormalities.

Depending on the experiment, the brew volume, time, and final temperature were measured along with the soluble solids extracted (hydrometer).

Quality Assurance method #8C 12/30/70 using a Rascher and Betzoid hydrometer was used to measure soluble solids in all brews. A comparison between the hydrometer versus sand solids confirmed that the two methods yielded equivalent results at a 95% statistical confidence level.

The repeatability of brew data was extremely high. In 22 10 cup brews with Norelco pots, an average soluble solids extraction of 0.77% with a standard deviation of only 0.037 was measured. All the analyses of variance showed significantly more intervariant variation then intravariation.

Experiments

Experiment 1 Evaluation of the performance of filter packs with decaffeinated coffee.

Number of measurements = 48, Number of replications = 3

Roasted decaffeinated coffee was brewed in four brands of appliances pots at two preparation levels in pouches made of either stretch of nonstretch paper.

Experiment 2 Detailed performance study of filter packs evaluating six variables.

Number of measurements = 400, Number of replications = 2

Twenty four variants were made with Richheimer roasted caffeinated coffee brewed in four brands of pots at two preparation levels in duplicate. The following variables were evaluated; grind, flange, stretch paper, headspace. A control, brewed loose in filters, was also tested.

Experiment 3 Quick evaluation of polypropylene paper.

Number of measurements = 5, Number of replications = 5

Pouches of stretch polypropylene filled with pilot plant roasted coffee equivalent to the coffee used for the other caffeinated work was prepared at the ten cup level in the Norelco Brewer five times.

Experiment 4 Effect on varying headspace - constant recipe

Number of measurements = 24, Number of replications = 3

Pilot plant roasted coffee packed at two headspace levels (23.5 or 35 grams) in stretch and nonstretch paper was brewed at a water addition level proportional to the grams of coffee in the pouch instead of the manufacturer's recommendation (pot line).

Experiment 5 Study of flange, paper, and engineered grind distribution.

Number of measurements = 48, Number of replications = 3

Pilot plant roasted coffee was pouched as one of the following four variants, stretch paper with flange (600 xbar), stretch paper without flange (600 xbar), Nonstretch paper with flange (600 xbar), and stretch paper with flange and engineered grind distribution. This grind distribution was prepared from 600 xbar coffee that was screened through a 70 mesh USA screen to remove all particles smaller than 212 microns.

Experiment 6 Polypropylene performance study

Number of measurements = 16, Number of replications = 2

Flanged, stretch polypropylene pouches were filled with pilot plant roasted caffeinated coffee at 600 xbar and brewed at the five and ten cup recipe on all four standard pots.

## Table 1
## Paper Performance

### Polyethylene (experiment #2)

n=8

| | % Soluble Solids | Brew Time (minutes) | Brew Volume (ml) | % Yield (Solids*Volume)/47g |
|---|---|---|---|---|
| Norelco | 0.74 | 12 | 1.538 | 24 |
| Mr Coffee | 0.88 | 11 | 1.299 | 24 |
| Braun | 0.81 | 10 | 1.228 | 21 |
| Krups | 0.79 | 10 | 1.300 | 22 |

### Polypropylene (experiment #6)

n=2

| | % Soluble Solids | Brew Time (minutes) | Brew Volume (ml) | % Yield (Solids*Volume)/47g |
|---|---|---|---|---|
| Norelco | 0.81 | 14 | 1.510 | 26 |
| Mr Coffee | 0.77 | 10 | 1.258 | 21 |
| Braun | 0.87 | 12 | 1.215 | 22 |
| Krups | 0.78 | 10 | 1.235 | 20 |

10 Cup Preparation - 2 Pouches/Pot - 23.5 Grams/Pouch

Referring to the drawings in detail, Figure 1 illustrates a schematic arrangement of a mold used for producing improved infusion coffee filter packs as described and tested herein. The mold arrangement includes a bottom mold 2 having a silicone gasket 4 placed on top thereof around the cylindrical mold pocket, a damping ring 5 for pressing the bottom filter ply into the mold pocket, and a heated top mold 8 driven by a piston to press together the top and bottom molds, with the top and bottom plys therebetween, to seal the top and bottom plys together.

The coffee filter packs or pouches as described and tested herein were made in a mold illustrated in Figure 1 in a procedure in which a bottom ply of filter paper is placed, plasticizer side up, above the bottom mold. The surface area of the bottom ply is then expanded or increased by causing the bottom ply to conform to the bottom mold. In the procedure, the bottom ply was caused to conform to the bottom mold by placing a circular ring (having a diameter slightly less than the diameter of the bottom mold) over the bottom ply and mechanically pushing or tamping the bottom ply into the bottom mold with the circular ring, then by pouring into the bottom mold pocket the measured amount of ground coffee, 35 grams for a standard five cup pack, then removing the ring, and placing the top ply, plasticizer down, over the bottom mold pocket and extending over the bottom ply in area surrounding the mold pocket, and then by actuating the piston driven and heated top mold to press down and heat seal together the top and bottom plys. The resultant product was then trimmed, as by die cutting, to form an infusion coffee filter pack having a five inch (12.7 cm) outer diameter, with a central four inch (10.2 cm) diameter pouch, having a one half inch (1.27 cm) flange area extending therearound.

In the particular described procedure, the area of the top filter ply, which is substantially flat, is $\pi \cdot r^2$ or $\pi \cdot (5")^2 = 78.54$ inches square ($\pi \cdot (12.7 \text{ cm})^2 = 506.7 \text{ cm}^2$).

The bottom filter ply had its area increased by the cylindrical band extending around the bottom mold, or by $n \cdot d \cdot h$ (height of mold pocket), or $\pi \cdot 4" \cdot 3/16" = 2.36$ inches square ($\pi \cdot 10.2 \text{ cm} \cdot 0.48 \text{ cm} = 15.1 \text{ cm}^2$). Thus, the total area of the bottom ply is now 80.9 square inches (521.9 cm$^2$) or an increase of 3%. For the larger 5/16 inch (0.79 cm) deep mold, the increase in area due to the cylindrical band extending around the bottom mold is $\pi \cdot 4" \cdot 5/16" = 3.93$ inches square ($\pi \cdot 10.2 \text{ cm} \cdot 0.79 \text{ cm} = 25.3 \text{ cm}^2$). Thus the total area of the bottom ply is now 82.47 inches square (532.1 cm$^2$), or an increase of 5%.

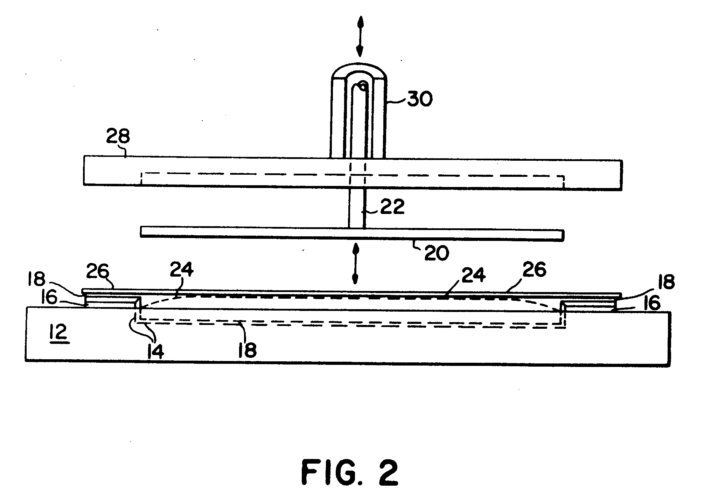

Figure 2 illustrates a second embodiment of a mold similar in some respects to that of Figure 1 in which a mold body 12 defines a cylindrical mold cavity 14 therein, having dimensions of 4 inches (10.2 cm) diameter by 3/16 inches (0.48 cm) depth (or 5/16 inch (0.79 cm) as noted hereinbelow). A bottom piece of filter paper 18 is placed over the mold cavity 14. The filter paper 18 is then caused to stretch and conform to the inner surface of the mold cavity, as by a mechanical tamper 20, or alternatively by a vacuum applied to the mold cavity. The tamper 20 can be a ring or a disc or any suitable shape, and can be positioned vertically by a vertically reciprocating shaft 22. A metered amount of coffee 24 is then deposited over the stretched filter paper 18 in the mold cavity. A top piece of filter paper 26 is then placed over the bottom filter paper, with the coffee in the pouch formed therebetween. An electrically heated sealing head 28, driven as by a vertically driven shaft 30, is then pressed over the first and second sheets of filter paper in the 1/2 inch (1.27 cm) margin area around the mold cavity, and a force is exerted on the heated sealing head for a given period of time, pressing and sealing together the first and second sheets of filter paper around the 1/2 inch (1.27 cm) margin area 32. The infusion coffee filter pack 34 is then removed and trimmed to a five inch (12.7 cm) diameter as by die cutting, and the process repeated.

In an automated version, the mold 12 could be one of several molds connected in an endless chain configuration, with each mold having the bottom filter paper placed thereover in a first station, at which the tamper 20 causes the filter paper to stretch and conform to the mold cavity, a metered amount of coffee is deposited over the bottom filter paper in the mold cavity in a second fill station, and the top filter paper is placed thereover in a third station, at which the sealing head 28 compresses and heat seals together the two sheets of filter paper, and the infusion coffee filter pack is then removed from the mold cavity and trimmed to a five inch (12.7 cm) diameter. The metered amount of ground coffee can be deposited by a standard metering and depositing machine.

Figure 3 illustrates a schematic arrangement of a rotary mold and packing arrangement, as might be used in a preferred commercial embodiment in which a first strip of filter paper is supplied from a supply roll 40 onto the cylindrical side surface of a rotating cylindrical mold 42. The rotary mold 42 preferably comprises a series of circumferentially spaced cylindrical mold pockets 44, each of which communicates with a central vacuum by a vacuum passageway 46. The applied vacuum causes the first strip of filter paper to stretch and conform to the mold pockets 44. At a location near the top of the cylindrical mold 42 when the mold pockets are substantially horizontal and level, a metered amount of ground coffee is deposited therein by a metering and depositing machine 48. A second filter strip is then supplied by a roll 50 around an idler roller 52 to apply a second filter strip over the first filter strip and the coffee filled pockets therein. The first and second filter strips are preferably formed from a polyethylene impregnated base filter paper to provide for heat sealing together by a heated sealing roller 54, which heats and presses the two sheets of filter paper together at all locations except those of the coffee pockets. The heated sealing roller 54 is provided with a series of circumferentially spaced cut-outs 56 therein in correspondence with the circumferentially spaced mold pockets 44 of the cylindrical mold, and accordingly the heated sealing roller 54 is driven in synchronism with the cylindrical mold 42 by a common mechanical drive 58. The strip 60 of sealed spaced coffee packs is then withdrawn from the rotating mold 42 over an output idler roller 62. The output strip 60 is then cut and trimmed by a die cutting machine to form individual infusion coffee packs 34. A suitable rotary die packaging machine similar to that of Figure 3 is commercially available from the Cloud Manufacturing Co., which produced and supplies packaging equipment for the food industry, and sells commercially rotary die packaging machines.

The first and second filter strips are preferably formed from a polypropylene, or alternatively a polyethylene, base filter paper to provide for heat sealing together. Moreover, the first and second pieces of filter paper can also be directed to the molds from continuous strip supplies thereof, as from supply rollers, and the process continued as described, forming an output strip of joined infusion coffee packs, which could then be cut and trimmed by a die cutting machine to form the individual infusion coffee packs 34.

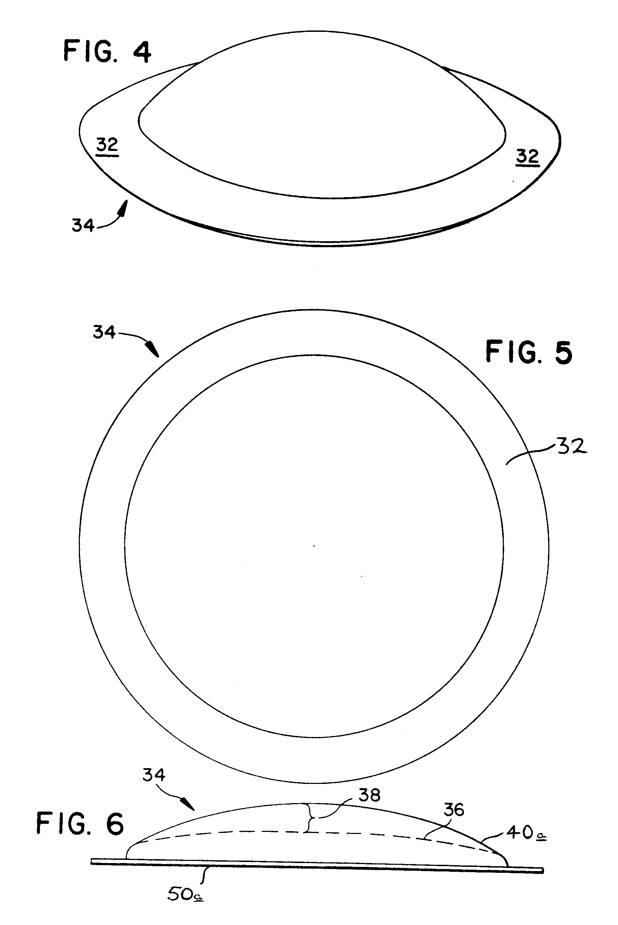

Figures 4 to 6 illustrate an individual infusion coffee pack in more detail. Reference numeral 32 indicates the sealing margin extending therearound. In Figure 6 the coffee 36 has a headspace, indicated at 38, above it. The first sheet of filter paper 40a has been stretched by at least 3%, whilst the second sheet of filter paper 50a remains substantially unstretched.

One object of the present invention is to provide universally fitting coffee filter packs having a central coffee pocket diameter of four inches (10.2 cm), with a one half inch (1.27 cm) sealing margin therearound, yielding a total diameter of five inches (12.7 cm), presents an appropriately sized infusion coffee pack for a universal fit to many different types of coffeemakers. Moreover, a brewing portion of five cups of water presents a convenient and marketable size, fitting most coffee makers. To provide an ideal volume of coffee grounds, together with a 50% expansion space for a five cup portion in a coffee central pocket diameter of four inches (10.2 cm), requires a rather steep edge to the coffee pocket. In view thereof, the cylindrical mold cavity must have a sharp, substantially ninety degree edge, which requires that the first strip of filter paper be able to stretch and yield a substantial amount to enable it to conform without tearing to the sharp contour of the circular top edge of the mold cavity. A creped stretch filter paper has been found to meet those requirements satisfactorily. The second strip of filter paper is applied substantially flat, and accordingly need not be stretch filter paper. However, supply stocks would be simplified by choosing the material of the second strip of filter paper to be the same as the first strip.

**Claims**

1. A drip infusion coffee pack (34) having loose coffee (36) therein comprising a first circular piece of filter paper (40a), a second circular piece of filter paper (50a), the first circular piece of filter paper (40a) having a greater surface area than the second circular piece of filter paper (50a) and peripherally sealed thereto to form a central rounded pocket surrounded by a sealed flange (32), and a metered quantity of loose ground coffee (36) within the rounded pocket, the rounded pocket having a head space within the rounded pocket, characterized in that the second circular piece of filter paper (50a) has a diameter of approximately five inches (12.70 cm), that the first circular piece of filter paper (40a) is formed from stretch filter paper and has had its surface area increased by at least 3% relative to the second circular piece of filter paper (50a), that the rounded pocket has a diameter of approximately four inches (10.16 cm), that the flange (32) is substantially an half inch (1.27 cm) in width, and that the head space within the rounded pocket constitutes substantially 50 percent or greater of the volume of the rounded pocket.

2. A drip infusion coffee pack according to claim 1, characterized in that said stretch filter paper has an elongation factor without tearing in excess of substantially 7%.

3. A drip infusion coffee pack according to claim 1 or claim 2, characterized in that the second piece of filter paper (50a), is a stretch filter paper of the same type as the first piece of filter paper (40a).

4. A drip infusion coffee pack according to any one of claims 1 to 3, characterized in that the metered amount of coffee (36) is metered to brew coffee with five cups of water.

**Patentansprüche**

1. Tropf-Brühkaffeepackung (34) mit losem Kaffee (36) darin, umfassend ein erstes kreisförmiges Stück Filterpapier (40a), ein zweites kreisförmiges Stück Filterpapier (50a), wobei das erste kreisförmige Stück Filterpapier (40a) eine größere Oberfläche als das zweite kreisförmige Stück Filterpapier (50a) aufweist und am Umfang mit diesem versiegelt ist, um eine von einem versiegelten Flansch (32) umgebene mittige gerundete Tasche zu bilden, und eine dosierte Menge an losem gemahlenem Kaffee (36) innerhalb der gerundeten Tasche, wobei die gerundete Tasche innerhalb der gerundeten Tasche einen Kopfraum aufweist, dadurch gekennzeichnet, daß das zweite kreisförmige Stück Filterpapier (50a) einen Durchmesser von ungefähr 5 Inches (12,70 cm) aufweist, daß das erste kreisförmige Stück Filterpapier (40a) aus dehnbarem Filterpapier gebildet ist, und daß seine Oberfläche relativ zum zweiten kreisförmigen Stück Filterpapier (50a) um mindestens 3 % vergrößert worden ist, daß die gerundete Tasche einen Durchmesser von ungefähr 4 Inches (10,16 cm) aufweist, daß der Flansch (32) im wesentlichen einen halben Inch (1,27 cm) breit ist, und daß der Kopfraum innerhalb der gerundeten Tasche im wesentlichen 50 % oder mehr des Volumens der gerundeten Tasche bildet.

2. Tropf-Brühkaffeepackung nach Anspruch 1, dadurch gekennzeichnet, daß das besagte dehnbare Filterpapier einen Dehnungsfaktor von über im wesentlichen 7 % aufweist, ohne zu reißen.

3. Tropf-Brühkaffeepackung nach Anspruch 1 oder Anspruch 2, dadurch gekennzeichnet, daß das zweite Stück Filterpapier (50a) ein dehnbares Filterpapier von derselben Art wie das erste Stück Filterpapier (40a) ist.

4. Tropf-Brühkaffeepackung nach einem beliebigen der Ansprüche 1 bis 3, dadurch gekennzeichnet, daß die dosierte Menge an Kaffee (36) dosiert ist, um den Kaffee mit fünf Tassen Wasser aufzubrühen.

**Revendications**

1. Emballage de café pour infusion par écoulement (34), contenant du café en vrac (36), qui est constitué d'une première pièce circulaire de papier filtre (40a), d'une seconde pièce circulaire de papier filtre (50a), la première pièce circulaire de papier filtre (40a) ayant une plus grande superficie de surface que la seconde pièce circulaire de papier filtre (50a) et étant scellée à la périphérie de celle-ci pour former une poche arrondie centrale entourée par une collerette scellée (32), et à l'intérieur de la poche arrondie, une quantité dosée de café moulu en vrac (36), la poche arrondie ayant un espace libre à l'intérieur de la poche arrondie, caractérisé en ce que la seconde pièce circulaire de papier filtre (50a) a un diamètre d'environ cinq pouces (12,70 cm), en ce que la première pièce circulaire de papier filtre (40a) est formée de papier filtre étirable dont la superficie de surface a été augmentée d'au moins 3% par rapport à la seconde pièce circulaire de papier filtre (50a), en ce que la poche arrondie a un diamètre d'environ quatre pouces (10,16 cm), en ce que la collerette (32) fait sensiblement un demi-pouce (1,27 cm) de large, et en ce que l'espace libre dans la poche arrondie occupe au moins sensiblement 50 pour cent du volume de la poche arrondie.

2. Emballage de café pour infusion par écoulement selon la revendication 1, caractérisé en ce que ledit papier filtre étirable a un facteur d'allongement sans déchirement excédant sensiblement 7%.

3. Emballage de café pour infusion par écoulement selon la revendication 1 ou la revendication 2, caractérisé en ce que la seconde pièce de papier filtre (50a), est un papier filtre étirable du même type que celui de la première pièce de papier filtre (40a).

4. Emballage de café pour infusion par écoulement selon l'une quelconque des revendications 1 à 3, caractérisé en ce que la quantité dosée de café (36) est dosée pour préparer du café avec un volume d'eau de cinq tasses.

Top mold

Heated, piston driven head bolted to plate

8

Top ply, plasticizer down

Coffee ⟶ damping ring 6

Bottom ply, plasticizer up

Silicone Gasket 4

2

Bottom mold

4"

3/16"

FIG. I

FIG. 2

FIG. 3

FIG. 4

32

32

34

34

FIG. 5

32

34

FIG. 6

38

36

40₌

50₌

Brew Strength: Pouch vs Loose    FIG. 7

(SS in Variant/SS when brewed Loose)*100

Preparation Level (cups)

Stretch Paper American

Non-Stretch Paper American

Stretch Paper European

Non-Stretch Paper European

Experiment #2

n = 4 for loose coffee
n = 16 for pouches

EP 0 422 898 B1

Brew Time vs Pouch Design          FIG. 8

% Soluble Solids

Extraction Rate (ml/minute)

○ Flange w/stretch

＊ Flange w/non-stretch

△ No Flange w/stretch

American Pots          European Pots          Experiment 5
                                                n=6/ point

EP 0 422 898 B1

Headspace vs paper vs Pot type

FIG. 9

EP 0 422 898 B1

10 Cup Preparation
2 Pouches/Pot

Variables

Experiment #2
n=32

American Pot
Stretch Paper

American Pot
Non-Strecth Paper

European Pot
Stretch Paper

European Pot
Non-Stretch Paper

Paper vs Flange

FIG. 10

Standand Deviation of % SS

Variables

Stretch · No Stretch

Note: Sample size = 16/variable  
Experiment # 2

Flange   No Flange

= Statistically Significant

Paper vs Flange vs Pot-type

FIG. II

Standard Deviation of % SS

0.2
0.15
0.1
0.05
0

American Pots        European

Variables

⬜ Stretch Paper w/Flange        ◩ Stretch Paper w/No Flange        → = Statistically Significant

⬛ Non-Stretch Paper w/Flange        ⬛ Non-Stretch Paper w/No Flange

Note: Sample size =16/variable
    Experiment #2

EP 0 422 898 B1